# EUROPEAN PATENT SPECIFICATION

(11) **EP 2 651 028 B1**
(45) Date of publication and mention of the grant of the patent: **13.03.2019**
(21) Application number: 12164084.1
(22) Date of filing: 13.04.2012
(51) Int. Cl.: H02P 21/05, H02P 29/00

(54) **ESTIMATION OF COGGING TORQUE**
EINSCHÄTZUNG VON RASTMOMENTEN
ESTIMATION DE PULSATIONS DE COUPLE

(43) Date of publication of application: 16.10.2013
(73) Proprietor: Siemens Aktiengesellschaft, 80333 München (DE)
(72) Inventor: Wu, Zhan-Yuan, Sheffield, S10 4BB (GB)

(56) References cited:
- DE-A1-102009 000 928
- US-A1- 2006 132 082
- US-A1- 2009 251 096

## Description

### Technical Field

The invention refers to a method of controlling an electric generator, an electric generator operable according to the inventive method and a wind turbine comprising such an electric generator.

### Technical Background

Cogging torque is an undesirable effect present in electrical motors or generators which is caused by the position dependent interaction between the rotor and the stator of the electric machine. This interaction causes a ripple in the torque of the electric machine which can lead to jerkiness of motion. The phenomenon of cogging torque is especially prominent at lower rotating speeds because at higher speeds the motor moment of inertia of the rotating machine will filter out the effect of cogging torque. For this reason cogging torque is especially problematic in generators operated at low rotating speeds such as generators used in wind turbine, more particularly in direct-drive wind turbines.

The contribution of cogging torque to the generator torque ripple can be reduced by means of control provided that its value is known.

US 2009/0251096 A1 deals with reducing cogging torque in a motor by providing an operating current comprising harmonic overtones from an inverter to the motor.

The cogging torque in a machine can be either predicted, e.g. referring to a finite elements method, or measured using a specially designed test rig. Due to the effects of material variation, manufacture tolerance and the like often there is a big error in the predicted value which results in dissatisfying cancellation of the cogging torque. On the other hand, the experimental method subjects to the high requirements that the machine has to rotate at a constant low speed, which may be difficult to ensure because of the cogging torque, and that the torque transducers must have a high bandwidth to give accurate readings. Also the mechanical resonance in the test system could create difficulties for good measurement of the cogging torque.

In view of the above, an enhanced method of determining the cogging torque in a specific electric generator is sought.

### Summary of the Invention

For these reasons, a first aspect of the invention provides a method of controlling an electric generator according to claim 1.

The invention is based on the idea that instead of predicting or measuring the cogging torque directly, it can be estimated from the currents required to cancel out the cogging torque effect. Accordingly, the method of the invention proposes a test run during which a suitable compensating current is determined in an iterative manner. Under test conditions the compensation current results in a desirably low cogging torque effect. Once the suitable compensating current is known, the electric generator can be operated using an operating compensating current which is derived from the values determined in the test run in accordance with an operating state of the electric generator. For example, the operating compensating current may be derived from the compensating current in consideration of a current rotating speed, generator load or operating temperature all of which may differ from the operating conditions of the test run and may have an influence on the generation of cogging torque. In this way the method of the invention allows for compensation of variations in cogging torque due to varying operating states of the electric generator.

As the cogging torque signal is only used for indication, less expensive sensors with a comparatively low bandwidth can be used. In addition, other indicative sources than torque signals can be used within the scope of the invention. This aspect of the invention is based on the idea that cogging torque produces noise and vibrations in the machine. Thus, the cogging torque signal may be a vibration signal or an acoustic signal. This has an advantage in that low-cost sensors may be used. Furthermore, if no torque sensor is available in a given implementation, signals from other sensors may be used lowering the overall cost.

Another advantage of the invention is that the test run can be carried out at a relatively high rotating speed which will cause less speed variations due to cogging torque and thus a correspondingly low effect on measurement accuracy.

The predetermined condition may be met when the cogging torque signal indicates that the cogging torque of the electric generator is lower than a threshold cogging torque. In this case the present predetermined current characteristic may be selected as the base operating current characteristic. Referring to a threshold cogging torque can shorten the test run because it may not be necessary to test a high number of predetermined current characteristics. However, a potentially sub-optimal set of values may be chosen.

Alternatively the predetermined condition may be met when a predetermined number of predetermined current characteristics has been tested in steps b) and c) of the inventive method. In this case the one predetermined current characteristic is selected as the base operating current characteristic for which the measured cogging torque signal indicates a minimum cogging torque. The advantage of this embodiment of the inventive method is that always the setting which results in the lowest residual cogging torque will be selected. However, the test run can take a long time to complete.

Preferably the operating current characteristic will be derived from the base operating current characteristic using a mathematical model of the generation of cogging torque in the electric generator. For example, the mathematical model may describe the dependence of cogging torque on the rotating speed of the electric generator. Since the rotating speed at which the test run was carried out is known, a suitable operating current characteristic can be determined for rotating speeds that differ from that of the test run. The mathematical model can be based on corresponding measurements of cogging torque in a specific electric generator and be applied to others electric generators of the same make and build.

The compensating current may be represented using the dqo-transformation which is also often referred to as Park's Transform. At least one of the d- and q-parameters may be varied during the steps b), c) and d) of the inventive method. The dqo-transformation allows for a simple way of expressing currents present in an electric machine. Varying parameters in the dqo-representation can lead to suitable compensating currents faster.

The method of the invention may also be carried out for a plurality of different rotating speeds. Even though the generation of cogging torque can be modelled, the precision of the model will benefit from performing multiple test runs.

The method of the invention may also be carried out for a plurality of different generator loads. Generally the test can be done under any load conditions but a test without load is preferred. If more than one test runs are carried out, varying the generator load may also result in a more precise model of cogging torque.

In some embodiments of the inventive method an operating temperature of the electric generator may be measured. Then, deriving the operating current characteristic from the base operating current characteristic may be carried out in accordance with the measured operating temperature. These embodiments take into account that the presence of cogging torque may also depend on the operating temperature of the electric generator.

A second aspect of the invention provides an electric generator according to claim 9, having a control unit adapted to carry out the method of the invention. A third aspect of the invention is directed at a wind turbine comprising such an electric generator.

### Short Description of the Figures

These and other features, aspects and advantages of the invention will become better understood with reference to the following description and accompanying drawings in which:
Fig. 1 shows a transient waveform of torque ripple in an electric generator; and
Fig. 2 shows a transient waveform of a torque caused by an injected compensating current.

### Detailed Description of the Figures

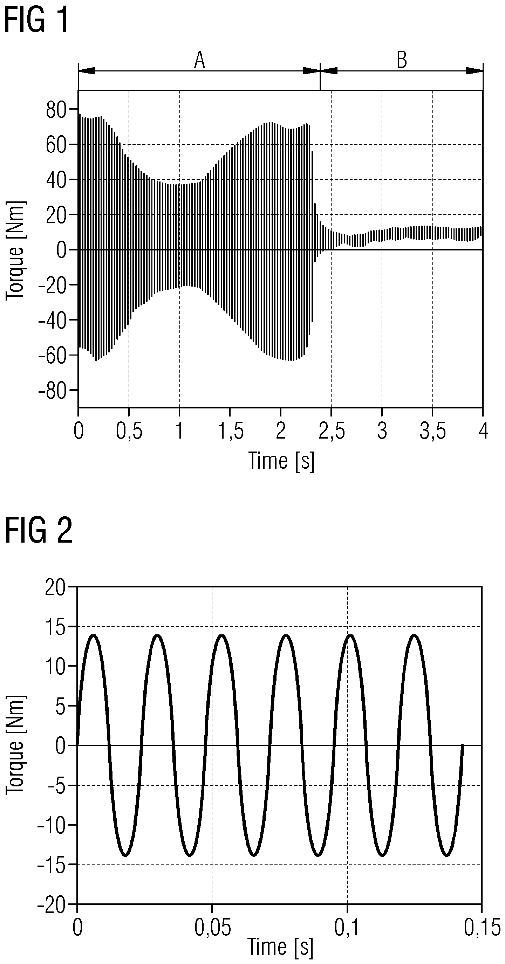

Fig. 1 shows a transient waveform of torque ripple in an electric generator. The waveform is divided into two consecutive sections A and B. In the waveform only the variable portion of the generator torque is shown.

For the example of Fig. 1 the generator was rotated at a speed of 30 rpm. During section A no compensating currents are injected and accordingly the generator torque exhibits a strong ripple spanning approximately 140 Nm. During section B a compensating current is injected effectively reducing the torque ripple to less than 10 Nm.

In the example a current in the d-q frame having a frequency six times that of the rotating speed of the generator was injected because the periodicity per revolution of cogging torque depends on the number of magnetic poles and the number of teeth on the stator. In the common case of an integer slot machine electric generator the cogging torque waveform will normally be dominated by the 6f harmonic. However, the method of the invention is applicable to any other number of poles which may require other harmonic orders. In some embodiments of the invention it may be useful to apply compensating currents comprising two or more different harmonics at the same time. This allows for cancelling non-sinusoidal cogging torque ripple.

Fig. 2 shows a transient waveform of a torque caused by an injected compensating current. The compensating current injected into the electric generator in section B of Fig. 1 causes a counter-torque ripple which then reduces the torque ripple caused by the cogging effect. In the illustrated example, a 6f harmonic current level of Iq = 0.6 A and Id = 0 A was found to provide for a minimum residual torque ripple.

While the invention has been described by referring to preferred embodiments and illustrations thereof, it is to be understood that the invention is not limited to the specific form of the embodiments shown and described herein, and that many changes and modifications may be made thereto within the scope of the appended claims by one of ordinary skill in the art.

## Claims

1. A method of controlling an electric generator, comprising a test run during which a suitable compensating current is determined in an iterative manner with the steps of:
step a) rotating the electric1 generator at a known rotating speed;
step b) while rotating the electric generator, measuring a cogging torque signal representative of a cogging torque of the electric generator, wherein the cogging torque signal is a torque signal, a vibration signal or an acoustic signal;
step c) injecting a compensating current having a predetermined current characteristic into the electric generator;
step d) repeating steps b) and c) for a plurality of different predetermined current characteristics until the measured cogging torque signal meets a predetermined condition;
and comprising further the steps of
step e) selecting one of the predetermined current characteristics of step d) as a base operating current characteristic; and
step f) operating the electric generator injecting an operating compensating current having an operating current characteristic derived from the base operating current characteristic in accordance with an operating state of the electric generator.

2. The method of claim 1, wherein the predetermined condition is met when the cogging torque signal indicates that the cogging torque of the electric generator is lower than a threshold cogging torque and wherein the present predetermined current characteristic is selected as the base operating current characteristic.

3. The method of claim 1, wherein the predetermined condition is met when a predetermined number of predetermined current characteristics has been tested in steps b) and c) and wherein the one predetermined current characteristic is selected as the base operating current characteristic for which the measured cogging torque signal indicates a minimum cogging torque.

4. The method of one of the preceding claims, wherein the operating current characteristic is derived from the base operating current characteristic using a mathematical model of the generation of cogging torque in the electric generator.

5. The method of one of the preceding claims, wherein the compensating current is represented using the dqo-transformation and wherein at least one of the d- and q-parameters is varied during the steps b), c) and d).

6. The method of one of the preceding claims, wherein the method is carried out for a plurality of different rotating speeds.

7. The method of one of the preceding claims, wherein the method is carried out for a plurality of different generator loads.

8. The method of one of the preceding claims, further comprising measuring an operating temperature of the electric generator, wherein deriving the operating current characteristic from the base operating current characteristic is carried out in accordance with the measured operating temperature.

9. An electric generator having a control unit, wherein the control unit is adapted to rotate the electric generator at a known rotating speed; to measure a cogging torque signal representative of a cogging torque of the electric generator while rotating the electric generator; to inject a compensating current having a predetermined current characteristic into the electric generator; to repeat; to measure a cogging torque signal representative of a cogging torque of the electric generator while rotating the electric generator and to inject a compensating current having a predetermined current characteristic into the electric generator until the measured cogging torque signal meets a predetermined condition in a test run during which a suitable compensating current is determined in an iterative manner; wherin the control unit is further adapted to select one of the predetermined current characteristics as a base operating current characteristic; and to operate the electric generator injecting an operating compensating current having an operating current characteristic derived from the base operating current characteristic in accordance with an operating state of the electric generator, wherein the cogging torque signal is a torque signal, a vibration signal or an acoustic signal.

10. A wind turbine comprising an electric generator according to the preceding claim.

## Patentansprüche

1. Verfahren zum Steuern eines Stromgenerators, umfassend einen Testlauf, bei dem ein geeigneter Ausgleichsstrom auf iterative Weise mit folgenden Schritten bestimmt wird:
Schritt a) Drehen eines Stromgenerators mit einer bekannten Drehgeschwindigkeit,
Schritt b) während des Drehens des Stromgenerators, Messen eines ein Rastmoment des Stromgenerators darstellenden Rastmomentsignals, wobei das Rastmomentsignal ein Drehmomentsignal, ein Schwingungssignal oder ein akustisches Signal ist,
Schritt c) Einspeisen eines Ausgleichsstroms mit einer vorgegebenen Stromkennlinie in den Stromgenerator,
Schritt d) Wiederholen der Schritte b) und c) für mehrere verschiedene, vorgegebene Stromkennlinien, bis das gemessene Rastmomentsignal eine vorgegebene Bedingung erfüllt,
sowie weiterhin umfassend die Schritte
Schritt e) Auswählen von einer der vorgegebenen Stromkennlinien aus Schritt d) als Basisbetriebsstromkennlinie, und
Schritt f) Betreiben des Stromgenerators unter Einspeisung eines Betriebsausgleichsstroms mit einer Betriebsstromkennlinie, die von der Basisbetriebsstromkennlinie entsprechend einem Betriebszustand des Stromgenerators abgeleitet ist.

2. Verfahren nach Anspruch 1, wobei die vorgegebene Bedingung erfüllt ist, wenn das Rastmomentsignal anzeigt, dass das Rastmoment des Stromgenerators niedriger als ein Schwellenrastmoment ist, und wobei die aktuelle vorgegebene Stromkennlinie als die Basisbetriebsstromkennlinie ausgewählt wird.

3. Verfahren nach Anspruch 1, wobei die vorgegebene Bedingung erfüllt ist, wenn eine vorgegebene Anzahl vorgegebener Stromkennlinien in den Schritten b) und c) getestet wurde, und wobei die eine vorgegebene Stromkennlinie als die Basisbetriebsstromkennlinie ausgewählt wird, für die das gemessene Rastmomentsignal ein minimales Rastmoment anzeigt.

4. Verfahren nach einem der vorhergehenden Ansprüche, wobei die Betriebsstromkennlinie von der Basisbetriebsstromkennlinie mittels eines mathematischen Modells zur Erzeugung eines Rastmoments im Stromgenerator abgeleitet wird.

5. Verfahren nach einem der vorhergehenden Ansprüche, wobei der Ausgleichsstrom mittels einer dq0-Transformation dargestellt wird und wobei mindestens einer der d- und q-Parameter bei den Schritten b), c) und d) variiert wird.

6. Verfahren nach einem der vorhergehenden Ansprüche, wobei das Verfahren für eine Vielzahl verschiedener Drehgeschwindigkeiten ausgeführt wird.

7. Verfahren nach einem der vorhergehenden Ansprüche, wobei das Verfahren für eine Vielzahl verschiedener Generatorlasten ausgeführt wird.

8. Verfahren nach einem der vorhergehenden Ansprüche, weiterhin umfassend das Messen einer Betriebstemperatur des Stromgenerators, wobei das Ableiten der Betriebsstromkennlinie von der Basisbetriebsstromkennlinie entsprechend der gemessenen Betriebstemperatur erfolgt.

9. Stromgenerator mit einer Steuereinheit, wobei die Steuereinheit dafür ausgelegt ist, den Stromgenerator mit einer bekannten Drehgeschwindigkeit zu drehen; während des Drehens des Stromgenerators ein das Rastmoment des Stromgenerators darstellendes Rastmomentsignal zu messen; einen Ausgleichsstrom mit einer vorgegebenen Stromkennlinie in den Stromgenerator einzuspeisen; ein das Rastmoment des Stromgenerators beim Drehen des Stromgenerators darstellendes Rastmomentsignal erneut zu messen und einen Ausgleichsstrom mit einer vorgegebenen Stromkennlinie in den Stromgenerator einzuspeisen, bis das gemessene Rastmomentsignal in einem Testlauf, bei dem auf iterative Weise ein geeigneter Ausgleichsstrom bestimmt wird, eine vorgegebene Bedingung erfüllt; wobei die Steuereinheit ferner dafür ausgelegt ist, eine der vorgegebenen Stromkennlinien als eine Basisbetriebsstromkennlinie zu wählen und den Stromgenerator unter Einspeisung eines Betriebsausgleichsstroms mit einer Betriebsstromkennlinie zu betreiben, die von der Basisbetriebsstromkennlinie entsprechend einem Betriebszustand des Stromgenerators abgeleitet wurde, wobei das Rastmomentsignal ein Drehmomentsignal, ein Schwingungssignal oder ein akustisches Signal ist.

10. Windturbine mit einem Stromgenerator gemäß dem vorhergehenden Anspruch.

## Revendications

1. Procédé de commande d'un générateur électrique, comprenant un cycle de test pendant lequel un courant de compensation adapté est déterminé de manière itérative avec les étapes consistant à :
étape a) faire tourner le générateur électrique à une vitesse de rotation connue ;
étape b) tout en faisant tourner le générateur électrique, mesurer un signal de couple d'engrènement représentatif d'un couple d'engrènement du générateur électrique, dans lequel le signal de couple d'engrènement est un signal de couple, un signal de vibration ou un signal sonore ;
étape c) injecter un courant de compensation présentant une caractéristique de courant prédéterminée dans le générateur électrique ;
étape d) répéter les étapes b) et c) pour une pluralité de différentes caractéristiques de courant prédéterminées jusqu'à ce que le signal de couple d'engrènement mesuré respecte une condition prédéterminée ;
et comprenant en outre les étapes consistant à
étape e) sélectionner une des caractéristiques de courant prédéterminées de l'étape d) comme une caractéristique de courant opérationnel de base ; et
étape f) faire fonctionner le générateur électrique en injectant un courant de compensation opérationnel présentant une caractéristique de courant opérationnel tirée de la caractéristique de courant opérationnel de base conformément à un état opérationnel du générateur électrique.

2. Procédé selon la revendication 1, dans lequel la condition prédéterminée est satisfaite lorsque le signal de couple d'engrènement indique que ledit couple d'engrènement du générateur électrique est inférieur à un couple d'engrènement de seuil et dans lequel la présente caractéristique de courant prédéterminée est sélectionnée comme la caractéristique de courant opérationnel de base.

3. Procédé selon la revendication 1, dans lequel la condition prédéterminée est satisfaite lorsqu'un nombre prédéterminé de caractéristiques de courant prédéterminées a été testé dans les étapes b) et c) et dans lequel ladite caractéristique de courant prédéterminée est sélectionnée comme la caractéristique de courant opérationnel de base pour laquelle le signal de couple d'engrènement mesuré indique un couple d'engrènement minimum.

4. Procédé selon l'une quelconque des revendications précédentes, dans lequel la caractéristique de courant opérationnel est tirée de la caractéristique de courant opérationnel de base en utilisant un modèle mathématique de la génération de couple d'engrènement dans le générateur électrique.

5. Procédé selon l'une quelconque des revendications précédentes, dans lequel le courant de compensation est représenté en utilisant la transformation dqo et dans lequel au moins des paramètres d et q est modifié pendant les étapes b), c) et d).

6. Procédé selon l'une quelconque des revendications précédentes, dans lequel le procédé est réalisé pour une pluralité de différentes vitesses de rotation.

7. Procédé selon l'une quelconque des revendications précédentes, dans lequel le procédé est réalisé pour une pluralité de différentes charges de générateur.

8. Procédé selon l'une quelconque des revendications précédentes, comprenant en outre la mesure d'une température de fonctionnement du générateur électrique, dans lequel l'obtention de la caractéristique de courant à partir de la caractéristique de courant opérationnel de base est réalisée conformément à la température opérationnelle mesurée.

9. Générateur électrique présentant une unité de commande, dans lequel l'unité de commande est conçue afin de faire tourner le générateur électrique à une vitesse de rotation connue ; afin de mesurer un signal de couple d'engrènement du générateur électrique pendant la rotation du générateur électrique ; afin d'injecter un courant de compensation présentant une caractéristique de courant prédéterminée dans le générateur électrique ; afin de répéter ; afin de mesurer un signal de couple d'engrènement représentatif d'un couple d'engrènement du générateur électrique tout en faisant tourner le générateur électrique et afin d'injecter un courant de compensation présentant une caractéristique de courant prédéterminée dans le générateur électrique jusqu'à ce que le signal de couple d'engrènement mesuré respecte une condition prédéterminée dans un cycle de test pendant lequel un courant de compensation adapté est déterminé d'une manière itérative ; dans lequel l'unité de commande est en outre conçue afin de sélectionner une des caractéristiques de courant prédéterminées comme caractéristique de courant opérationnel de base ; et afin de faire fonctionner le générateur électrique en injectant un courant de compensation opérationnel présentant une caractéristique de courant opérationnelle tirée de la caractéristique de courant opérationnelle de base, conformément à un état opérationnel du générateur électrique, dans lequel le signal de couple d'engrènement est un signal de couple, un signal de vibration ou un signal sonore.

10. Éolienne comprenant un générateur électrique selon la revendication précédente.
